Europäisches Patentamt

European Patent Office

Office européen des brevets

(11) Veröffentlichungsnummer: 0 192 029
A1

# (12) EUROPÄISCHE PATENTANMELDUNG

(21) Anmeldenummer: 86100246.7

(22) Anmeldetag: 09.01.86

(51) Int. Cl.4: **H01B 17/14** , F16B 2/06

(30) Priorität: 13.02.85 DE 8504028 U

(43) Veröffentlichungstag der Anmeldung:
27.08.86 Patentblatt 86/35

(84) Benannte Vertragsstaaten:
AT BE DE FR GB IT NL SE

(71) Anmelder: Siemens Aktiengesellschaft Berlin und
München
Wittelsbacherplatz 2
D-8000 München 2(DE)

(72) Erfinder: Foissner, Herbert, Dipl.-Ing.(FH)
Gipsenweg 16
D-8190 Wolfratshausen(DE)

(54) Drahtspannvorrichtung für einen Isolator eines kapazitiven Schutzzaunes.

(57) Eine Drahtspannvorrichtung für einen Isolator eines
kapazitiven Schutzzaunes ist im wesentlichen aus einem U-
förmigen Bügel aus Flachmaterial mit je einer Öffnung in der
Nähe der U-förmigen Biegung und von einem dreh- und
verrastbaren Bolzen gebildet, der nahe am freien Ende der
beiden Schenkel des U-Bügels gelagert ist. Die Drahtspannvorrichtung ist an einer U-förmig gebogenen Isolatorelektrode
am freien Schenkel angeordnet. Zur verbesserten Kontaktgabe ist im Bereich der U-förmigen Biegung die Drahtspannvorrichtung als Klemmvorrichtung ausgebildet. Dabei umschließt die U-förmige Biegung eine Querschraube
annähernd im Winkel von 180°. Die U-förmige Biegung weist
von den beiden Öffnungen nach außen weisend einen Schlitz
auf. Ein Schenkel der Drahtspannvorrichtung kann zwischen
der Öffnung und dem Bolzen Z-förmig abgewinkelt sein.

FIG 1

EP 0 192 029 A1

Rank Xerox

Drahtspannvorrichtung für einen Isolator eines kapazitiven Schutzzaunes

Die Erfindungbezieht sich auf eine Drahtspannvorrichtung für einen Isolator eines kapazitiven Schutzzaunes gemäß dem Oberbegriff des Anspruchs 1.

Bei einem kapazitiven Schutzzaun sind übereinander angeordnete Elektrodendrähte horizontal verlaufend an Isolatoren befestigt. Um den Elektrodendraht zu spannen, ist an der Elektrode des Isolators eine Drahtspannvorrichtung angeordnet. Diese Drahtspannvorrichtung muß nicht nur durch Aufwickeln des Drahtes die erforderliche Zugspannung im Elektrodendraht erzeugen, sondern sie muß auch die elektrische Verbindung zwischen dem Elektrodendraht und der Isolatorelektrode, die als Spannbügel ausgebildet sein kann, sicherstellen. Eine bekannte Drahtspannvorrichtung weist die Form eines U-Bügels aus Flachmaterial auf, mit einem dreh- und verrastbaren Bolzen, der nahe am freien Ende der beiden Schenkel des U-Bügels gelagert ist, und mit zwei fluchtenden Öffnungen, die jeweils in einem Schenkel nahe der Biegung des U-Bügels angeordnet sind. Ist die Elektrode eines Isolators beispielsweise als U-förmig gebogener Zugbügel ausgebildet, dessen einer Schenkel mittig im Isolator befestigt ist und dessen freier Schenkel eine Einschnürung aufweist, so kann dort die bekannte Drahtspannvorrichtung mit den beiden Öffnungen drehbar gelagert sein, wobei eine Öffnung eine Nase aufweist, die in der Einschnürung des Zugbügels die Drahtspannvorrichtung fixiert. Dabei erfolgt die Kontaktgabe zwischen dem Elektrodendraht bzw. der Drahtspannvorrichtung und der Isolatorelektrode bzw. dem Zugbügel an den Auflagepunkten der beiden Öffnungen der Drahtspannvorrichtung und den Zugbügel. Die nötige Auflagekraft, beispielsweise je 100 N, wird von der Zugkraft des Drahtes hervorgerufen. Die Verwendung der bekannten Drahtspannvorrichtung bei ungünstigen klimatischen Bedingungen, z.B. sehr staubige und windige Umgebungen (Wüste) führte zu starken Verschmutzungen an den Kontaktstellen. Derartige Staubablagerungen führten trotz der relativ hohen Kontaktkräfte zu Übergangswiderständen von 5 Ωbis 50 kΩ, die sehr häufig zu unerwünschten Fehlalarmen führten.

Aufgabe der Erfindung ist es daher, eine Drahtspannvorrichtung der oben beschriebenen Art so auszubilden, daß bei ungünstigen klimatischen Bedingungen eine verbesserte und zuverlässige Kontaktgabe gewährleistet ist.

Diese Aufgabe wird Erfindungsgemäß bei einer eingangs beschriebenen Drahtspannvorrichtung mit dem kennzeichnenden Merkmal des Anspruchs 1 gelöst.

Die erfindungsgemäße Drahtspannvorrichtung ist zumindest an einer Kontaktstelle mit der Elektrode des Isolators fest verklemmt, so daß die oben geschilderten Nachteile vermieden werden und sich dort kein Staub und Schmutz ablagern kann, der zu störenden Übergangswiderständen führen würde. Zweckmäßige Ausbildungen der Erfindung sind durch die Unteransprüche gekennzeichnet.

Die Erfindung wird an einem Ausführungsbeispiel anhand der Zeichnung beschrieben.
Dabei zeigen

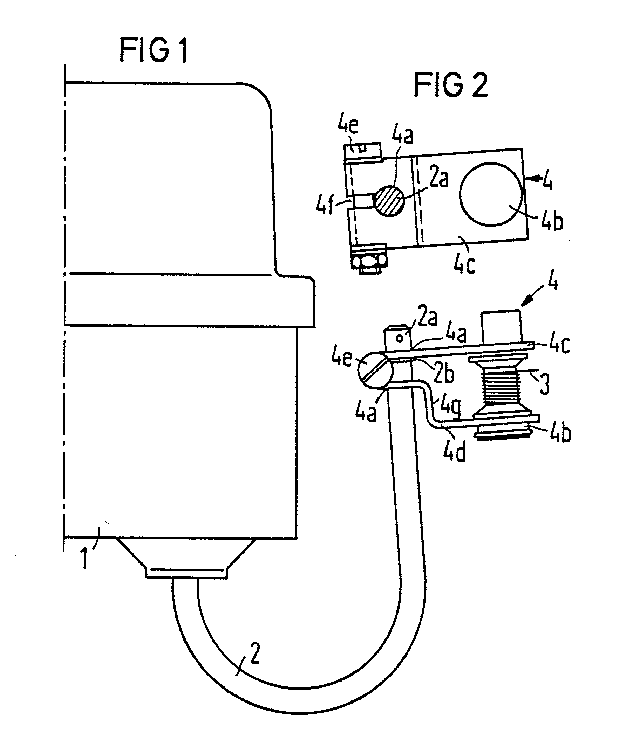

Fig. 1 die erfindungsgemäße Drahtspannvorrichtung an einer Isolatorelektrode in Seitenansicht und

Fig. 2 die Drahtspannvorrichtung in Draufsicht.

Am Isolator 1 ist mittig unten herausgeführt die Elektrode 2 angeordnet, die U-förmig gebogen ist und einen Zugbügel mit einem freien Schenkel 2a bildet. Dort ist eine Einschnürung 2d angeordnet, an der die erfindungsgemäße Drahtspannvorrichtung 4 fixiert ist. Die Drahtspannvorrichtung 4 ist im wesentlichen von einem U-förmigen Bügel aus Flachmaterial mit den beiden Schenkeln 4b und 4c gebildet. Im Bereich der U-förmigen Biegung ist die Drahtspannvorrichtung 4 als Klemmvorrichtung ausgebildet. Dabei umschließt die U-förmige Biegung eine Querschraube 4e annähernd im Winkel von 180°. Im U-förmigen Bügel sind in den beiden Schenkeln 4b und 4c jeweils eine miteinander fluchtende Öffnung 4a angebracht. Von diesen Öffnungen nach außen weisend ist im U-Bügel ein Schlitz 4f angeordnet. Der obere Schenkel 4c der Drahtvorrichtung 4 ist mit seiner Öffnung 4a in der Einschnürung 2b der Isolatorelektrode 2 fixiert. Der untere Schenkel 4b der Drahtspannvorrichtung 4 ist zwischen der Öffnung 4a und den Bolzen 4b Z-förmig 4g abgewinkelt. Mit dem Bolzen wird durch Aufwickeln des Elektrodendrahtes 3 der Elektrodendraht gespannt. Mit der Querschraube 4f wird die Drahtspannvorrichtung 4 am Zugbügel 2 des Isolators 1 festgeklemmt, so daß eine zuverlässige Kontaktgabe sichergestellt ist.

**Ansprüche**

1. Drahtspannvorrichtung für einen Isolator eines kapazitiven Schutzzaunes, wobei der Isolator (1) eine nach unten herausgeführte, mittig angeordnete Elektrode (2) aufweist, die U-förmig gebogen ist und einen Spannbügel bildet, an dessen freiem Schenkel (2a) an einer Einschnürung (2b) die Drahtspannvorrichtung (4) angeordnet ist, die im wesentlichen von einem U-förmigen Bügel aus Flachmaterial mit je einer Öffnung (4a) in der Nähe der U-förmigen Biegung und von einem dreh- und verrastbaren Bolzen - (4b) gebildet ist, der nahe am freien Ende der beiden Schenkel (4c und 4d) des U-Bügels gelagert ist, **dadurch gekennzeichnet** , daß die Drahtspannvorrichtung (4) im Bereich der U-förmigen Biegung als Klemmvorrichtung ausgebildet ist.

2. Drahtspannvorrichtung nach Anspruch 1, **dadurch gekennzeichnet,** daß die U-förmige Biegung des Bügels eine Querschraube (4e) annähernd im 180°-Winkel umschließt und einen von den beiden Öffnungen (4a) nach außen weisenden Schlitz (4f) aufweist.

3. Drahtspannvorrichtung nach Anspruch 1 oder 2, **dadurch gekennzeichnet** , daß ein Schenkel (4c) zwischen der Öffnung (4a) und dem Bolzen (4b) annähernd Z-förmig (4g) abgewinkelt ist.

**FIG 1**

**FIG 2**

1

2

4e 4a

2a

4

4f

4b

4c

4

2a 4a

4c

4e

2b

3

4a

4g

4d

4b

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 016 770  (ENTERS) <br> * Spalte 2, Zeilen 49-68; Figur 1 * | 1,2 | H 01 B   17/14 <br> F 16 B    2/06 |
| | --- | | |
| Y | EP-A-0 121 783  (SIEMENS) <br> * Seite 17, Zeilen 11-26; Figur 6 * | 1,2 | |
| | --- | | |
| A | DE-A-2 851 054  (VOLKSWAGENWERK) <br> * Seite 5, Absatz 1; Figur 1 * | 1,2 | |
| | --- | | |
| A | FR-A-1 030 365  (DESCHAMPS) <br> * Seite 1, linke Spalte, Absatz 7; Figuren 1,2 * | 1 | |
| | --- | | |
| A | GB-A-  754 049  (ROANOID) <br> * Seite 1, Zeilen 40-58; Figur 4 * | 1 | |
| | | | RECHERCHIERTE SACHGEBIETE (Int. Cl.4) |
| | ----- | | H 01 B   17/00 <br> F 16 B    2/00 <br> H 01 R    4/00 |

Der vorliegende Recherchenbericht wurde für alle Patentansprüche erstellt.

| Recherchenort <br> DEN HAAG | Abschlußdatum der Recherche <br> 27-05-1986 | Prüfer <br> TIELEMANS H.L.A. |
|---|---|---|

KATEGORIE DER GENANNTEN DOKUMENTE
X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
  nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82